# EUROPEAN PATENT APPLICATION

(11) **EP 4 848 093 A1**
(43) Date of publication of application: **02.12.2026**
(21) Application number: 24922972.5
(22) Date of filing: 08.02.2024
(51) Int. Cl.: G06F 11/30

(54) **PARAMETER RECOMMENDATION METHOD AND APPARATUS, AND DEVICE**

(71) Applicant: Yinwang Intelligent Technologies Co., Ltd., Shenzhen, Guangdong 518110 (CN)
(72) Inventor: XU, Ke, Shenzhen, Guangdong 518129 (CN)
(74) Representative: Gill Jennings & Every LLP
(86) International application number: PCT/CN2024/076966
(87) International publication number: WO 2025/166737

(57) **Abstract**

This application provides a parameter recommendation method and apparatus, and a device. The method includes: identifying first performance status information by using a parameter determining model corresponding to a vehicle control apparatus, to obtain M first parameter groups of the vehicle control apparatus and second performance status information corresponding to each first parameter group, where the second performance status information indicates a performance status of the vehicle control apparatus when the vehicle control apparatus runs based on the first parameter group, to improve parameter adjustment efficiency and effectively improve system performance obtained through parameter adjustment. Further, recommendation information sent by a server includes the second performance status information corresponding to each of the M first parameter groups, to represent the performance status that can be achieved by the vehicle control apparatus by using the first parameter group, and further ensure that the performance status that is achieved by the vehicle control apparatus finally by using the first parameter group satisfies a performance requirement.

## Description

### TECHNICAL FIELD

This application relates to the field of vehicle technologies, and in particular, to a parameter recommendation method and apparatus, and a device.

### BACKGROUND

As the "brain" of a vehicle, a computing platform for intelligent driving services is used to implement intelligent driving operations such as sensing, positioning, decision-making, planning, and control. Therefore, the computing platform may include a plurality of different types of processing units, for example, a unit for executing an image processing task, a unit for executing a computing task, and a unit for executing artificial intelligence (artificial intelligence, AI) acceleration, to provide a computing capability of a heterogeneous service by using the processing units, and ensure end-to-end running of an intelligent driving service. The processing units share memory bandwidth when providing the computing capability of the heterogeneous service. Therefore, memory bandwidth preemption occurs. When a plurality of processing units preempt memory bandwidth, problems such as image data frame loss, high CPU usage, and high AI inference latency may occur.

To alleviate a problem of memory bandwidth preemption, currently, a system running status is usually manually observed, and a system parameter is manually adjusted. In this case, parameter adjustment efficiency is low, and it cannot be ensured that system performance is effectively improved through parameter adjustment. Therefore, an intelligent solution for determining a system parameter is urgently needed.

### SUMMARY

According to a parameter recommendation method, apparatus, and device provided in this application, a solution for intelligently determining a system parameter is provided, to improve system parameter adjustment efficiency and effectively improve system performance obtained through parameter adjustment.

According to a first aspect, this application provides a parameter recommendation method. The method may be executed by a server, and the server may be implemented as an electronic device or a component in an electronic device, for example, a chip or a chip system.

The method includes: A server identifies first performance status information of a vehicle control apparatus by using a parameter determining model corresponding to the vehicle control apparatus, to obtain M first parameter groups of the vehicle control apparatus and second performance status information corresponding to each first parameter group, where the second performance status information indicates a performance status of the vehicle control apparatus when the vehicle control apparatus runs based on the corresponding first parameter group. The server sends recommendation information, where the recommendation information includes the foregoing M first parameter groups and the second performance status information corresponding to each first parameter group. The recommendation information can indicate the performance status that can be achieved by the vehicle control apparatus by using the first parameter group, so that the performance status of the vehicle control apparatus by using the first parameter group can satisfy a performance requirement, that is, parameter adjustment efficiency can be improved, and system performance obtained through parameter adjustment can be effectively improved.

In a possible implementation, the recommendation information may further include performance boundary information, and the performance boundary information may be determined based on historical performance status information of the vehicle control apparatus. The recommendation information is used to generate a recommendation interface. The recommendation interface generated based on the recommendation information includes a position relationship between the second performance status information corresponding to each first parameter group and the performance boundary information in a coordinate system. The position relationship between the second performance status information corresponding to each first parameter group and the performance boundary information in the coordinate system is presented in the recommendation interface, so that a difference between the second performance status information corresponding to the first parameter group and an optimal performance status of the vehicle control apparatus may be presented in a visualized manner, so that a user determines the first parameter group used for parameter adjustment of the vehicle control apparatus.

Optionally, the first performance status information may include one or more values of each of N performance parameters, where N is a positive integer. The N performance parameters may include but are not limited to at least one of CPU processing performance, AI processing performance, and image signal processing performance.

Optionally, the second performance status information may include the one or more values of each of the N performance parameters, where N is a positive integer. The N performance parameters may include but are not limited to at least one of CPU processing performance, AI processing performance, and image signal processing performance.

In a possible implementation, each of the M first parameter groups corresponds to one recommended parameter, the first parameter group enables optimal performance of the recommended parameter of the vehicle control apparatus, and the recommended parameter is one of the N performance parameters, or the recommended parameter is determined by at least two performance parameters of the N performance parameters. The recommended parameter may reflect a recommended dimension of the corresponding first parameter group, to represent an advantage of the performance status that can be achieved by the vehicle control apparatus by using the first parameter group.

In a possible implementation, the server may input the first performance status information into the parameter determining model to obtain K second parameter groups, send the K second parameter groups, and then receive the M first parameter groups and the second performance status information corresponding to each first parameter group. The M first parameter groups are obtained when iterative optimization is performed on each of the K second parameter groups until the performance status of the vehicle control apparatus satisfies a preset performance status threshold. In the foregoing manner, the K parameter groups output by the parameter determining model are further filtered and/or fine-tuned, to obtain the M parameter groups for performing parameter adjustment on the vehicle control apparatus, which can further ensure that system performance obtained through parameter adjustment is effectively improved.

In a possible implementation, the server may sort the K second parameter groups according to a Pareto algorithm, and send the sorted K second parameter groups, so that a receive end subsequently performs filtering on the K second parameter groups.

In a possible implementation, the performance boundary information includes a plurality of performance boundary values, and the performance status threshold is associated with the performance boundary information. For example, the performance status threshold may be a performance boundary value. For another example, a distance between the performance status threshold and the performance boundary value may be less than or equal to a preset value. The performance boundary information may be determined based on the historical performance status information of the vehicle control apparatus. The performance boundary information may indicate the optimal performance status that can be achieved by the vehicle control apparatus. The performance status threshold is associated with the performance boundary information to ensure that the first parameter group obtained through filtering can enable the vehicle control apparatus to have a good performance status.

In a possible implementation, the server may send recommendation information of the K second parameter groups, where the recommendation information includes information about each of the K second parameter groups. When the K second parameter groups are used as final recommended parameters, a parameter group used when the vehicle control apparatus performs parameter adjustment may be selected from the K second parameter groups and the M first parameter groups, to expand a parameter group selection range. When the K second parameter groups are not used as the final recommended parameters, execution process data of the parameter recommendation method may be presented, to improve reliability of a recommendation result.

In a possible implementation, the server trains the parameter determining model based on the first performance status information and the M first parameter groups, to obtain an updated parameter determining model, and continuously improve identification accuracy of the parameter determining model.

In a possible implementation, the server may determine the performance boundary information according to the Pareto algorithm and based on the historical performance status information of the vehicle control apparatus.

According to a second aspect, this application provides a control apparatus, including: an obtaining module, configured to obtain first performance status information of a vehicle control apparatus and a parameter determining model corresponding to the vehicle control apparatus; and a processing module, configured to obtain, by using the parameter determining model and based on the first performance status information, M first parameter groups of the vehicle control apparatus and second performance status information corresponding to each first parameter group, where the second performance status information indicates a performance status of the vehicle control apparatus when the vehicle control apparatus runs based on the first parameter group; and a sending module, configured to send recommendation information, where the recommendation information includes second performance status information corresponding to each of the M first parameter groups.

In a possible implementation, the recommendation information further includes performance boundary information, the performance boundary information is determined based on historical performance status information of the vehicle control apparatus, the recommendation information is used to generate a recommendation interface, and the recommendation interface includes a position relationship between the second performance status information corresponding to each first parameter group and the performance boundary information in a coordinate system.

In a possible implementation, the first performance status information includes one or more values of each of the N performance parameters, and/or a second performance status includes the one or more values of each of the N performance parameters, and the N performance parameters include at least one of central processing unit CPU processing performance, artificial intelligence AI processing performance, and image signal processing performance.

In a possible implementation, each of the M first parameter groups corresponds to one recommended parameter, the first parameter group enables optimal performance of the recommended parameter of the vehicle control apparatus, and the recommended parameter is one of the N performance parameters, or the recommended parameter is determined by at least two performance parameters of the N performance parameters.

In a possible implementation, the processing module is specifically configured to: input the first performance status information into the parameter determining model, to obtain K second parameter groups; send the K second parameter groups; and receive the M first parameter groups and the second performance status information corresponding to each first parameter group, where the M first parameter groups are obtained by performing iterative optimization on each of the K second parameter groups until the performance status of the vehicle control apparatus satisfies a preset performance status threshold.

In a possible implementation, the processing module is specifically configured to: sort the K second parameter groups according to a Pareto algorithm; and send the sorted K second parameter groups.

In a possible implementation, the performance status threshold is associated with the performance boundary information.

In a possible implementation, the sending module is further configured to send recommendation information of the K second parameter groups, where the recommendation information includes information about each of the K second parameter groups.

In a possible implementation, the processing module is further configured to train the parameter determining model based on the first performance status information and the M first parameter groups, to obtain an updated parameter determining model.

In a possible implementation, the processing module is further configured to determine the performance boundary information according to the Pareto algorithm and based on the historical performance status information of the vehicle control apparatus.

In a third aspect, an embodiment of this application provides an electronic device, including a processor and a memory. The memory is configured to store a computer program, and the processor is configured to invoke and run the computer program stored in the memory, to perform the method in the first aspect or the possible implementations.

According to a fourth aspect, this application provides a chip, including a processor, configured to invoke computer instructions from a memory and run the computer instructions, to implement the method in the first aspect or the possible implementations.

According to a fifth aspect, this application provides a computer-readable storage medium, configured to store computer program instructions, where the computer program instructions enable a computer to perform the method in the first aspect or the possible implementations.

According to a sixth aspect, this application provides a computer program product, including computer program instructions, where the computer program instructions enable a computer to perform the method in the first aspect or the possible implementations.

For beneficial effect of the content in the second aspect to the sixth aspect and the possible implementations, refer to the beneficial effect brought by the first aspect and the possible implementations of the first aspect. Details are not described herein again.

### BRIEF DESCRIPTION OF DRAWINGS

FIG. 1 is a diagram of a structure of a computing platform according to an embodiment of this application;
FIG. 2 is a diagram of a structure of a vehicle control system according to an embodiment of this application;
FIG. 3 is a diagram of a structure of an electronic device according to an embodiment of this application;
FIG. 4 is a flowchart of a parameter recommendation method according to an embodiment of this application;
FIG. 5A is a diagram of a Pareto boundary according to this application;
FIG. 5B is a diagram of a Pareto-based performance boundary according to an embodiment of this application;
FIG. 6 is a diagram of a performance boundary according to an embodiment of this application; and
FIG. 7 is a block diagram of a parameter recommendation apparatus according to an embodiment of this application.

### DESCRIPTION OF EMBODIMENTS

The following describes the technical solutions in embodiments of this application with reference to the accompanying drawings in embodiments of this application.

A vehicle in embodiments of this application may be an intelligent vehicle, for example, an autonomous driving vehicle that implements automatic control of all functions, or an assisted driving vehicle that implements automatic control of some functions to provide driving assistance, or may be a common vehicle. For ease of description, these are collectively referred to as a vehicle in the following. When the vehicle in embodiments of this application is a common vehicle, automatic control may be performed on the vehicle by using an external device of the vehicle.

In this application, vehicle control can be implemented for any type of vehicle, for example, a fuel vehicle, a new energy vehicle, or a range-extended vehicle. When the vehicle is a fuel vehicle, kinetic energy and a control logic function of the vehicle are provided for the vehicle by using fuel. When the vehicle is a new energy vehicle, kinetic energy and a control logic function of the vehicle are provided for the vehicle by using new energy, where the new energy may include electric energy, methane, and the like. When the vehicle is a range-extended vehicle, kinetic energy and a control logic function of the vehicle are provided for the vehicle by using one of fuel and electric energy, or fuel and electric energy. The energy that provides the kinetic energy for the vehicle, or the energy provided for a power system of the vehicle, and the energy provided for the control logic function of the vehicle may be collectively referred to as vehicle energy supply. For ease of understanding, the following uses an example in which the kinetic energy and the control logic function of the vehicle are provided for the vehicle by using electric energy for description, which should not be construed as a limitation.

Intelligent driving is a vehicle driving behavior assisted or performed on behalf of a person by using artificial intelligence, and can compensate for a defect of human driving. After a large amount of research and development, great progress has been made in various sensors, computer performance, and technologies required for intelligent driving, and costs are gradually reduced. Therefore, intelligent driving has been widely used in a plurality of aspects such as automatic parking, adaptive cruise control (adaptive cruise control, ACC), automatic emergency braking, lane departure warning, and autonomous driving.

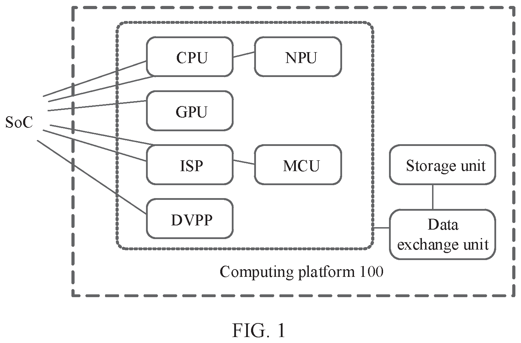

A computing platform for an intelligent driving service is deployed with software that runs various intelligent driving functions and serves as the "brain" of an intelligent driving system. Various sensors are connected to the computing platform in different transmission modes. The computing platform processes the sensors according to an algorithm to obtain a control signal and sends the control signal to a downstream execution unit. With reference to FIG. 1, to implement an intelligent driving service, a computing platform 100 in a vehicle may include a plurality of heterogeneous processing units. The processing unit may be implemented as a processing chip or an apparatus including a processing chip, or the processing unit may be implemented as a module in a processing chip. For example, the processing unit may be a central processing unit (central processing unit, CPU), a graphics processing unit (graphics processing unit, GPU), an image sensor processor (image sensor processor, ISP), a digital vision pre-processing (digital vision pre-processing, DVPP) module, a neural processing unit (neural processing unit, NPU), or a microcontroller unit (microcontroller unit, MCU). The processing units may be integrated in a same system on a chip (system on a chip, SoC). The CPU, the GPU, the ISP, the DVPP, or the NPU may also be referred to as a computing unit, and the MCU may also be referred to as a control unit. The MCU generates a control signal based on an input of at least one computing unit, and sends the control signal to a downstream execution unit such as an executor, to control the vehicle. In addition, the computing platform 100 may further include a data exchange unit, such as an input/output (I/O) interface or a storage unit. The units in the computing platform 100 may be connected to each other through a bus. Different processing units may be configured to execute different processing tasks, for example, executing an image processing task, a computing task, and an AI inference task. The computing platform 100 may be deployed in a vehicle control apparatus in the vehicle. In some scenarios, to improve a management capability for each processing unit, a vehicle system may be divided into a plurality of domains (for example, a vehicle control domain, an intelligent driving domain, and a cockpit domain). The vehicle control apparatus may be one or more domain controllers. For example, the vehicle control apparatus may be an intelligent driving domain controller, or referred to as a mobile data center (mobile data center, MDC).

The different processing units in the computing platform 100 share memory bandwidth during running. When bandwidth preemption occurs between the different processing units, a severe system performance problem may occur, for example, image data frame loss, high CPU usage, and high AI inference latency. To alleviate a memory bandwidth bottleneck problem, a system parameter may be adjusted, so that when the computing platform 100 runs based on an adjusted system parameter, a system performance problem caused by memory bandwidth preemption is avoided.

Currently, performance statuses of processing units in a computing platform may be monitored by using some flow control mechanisms or optimization tools. The performance status of the processing unit may include, for example, CPU usage, GPU usage, and memory bandwidth usage. A user can observe the performance status of the computing platform, analyze a service that preempts memory bandwidth, and optimize the service that preempts memory bandwidth by adjusting a system parameter. However, manual analysis is performed to determine an adjustment amount of the system parameter, which has low efficiency and cannot ensure that system performance can be effectively improved through parameter adjustment. Especially in a case in which there are a large quantity of system parameters, the parameter adjustment manner is less efficient and less accurate.

For the foregoing technical problem, in this application, a current performance status of a computing platform is identified by using a parameter determining model, to determine a parameter group (for example, M first parameter groups in the following) that can be recommended, and determine a performance status obtained after the computing platform performs parameter adjustment based on each parameter group. A user may perform parameter adjustment on the computing platform based on the determined parameter group, to improve parameter adjustment efficiency and ensure effective improvement of system performance obtained through parameter adjustment. Further, the user may determine, by using the performance status obtained after the computing platform performs parameter adjustment, whether to select a corresponding parameter group to perform parameter adjustment, so that system performance obtained through parameter adjustment satisfies a user expectation.

For ease of understanding, the following first describes terms in this application.
1. System parameter: System parameters in embodiments of this application include system parameters corresponding to different processing units in a vehicle control apparatus. The system parameter corresponding to each processing unit may include but is not limited to a configuration parameter in memory system resource partitioning and monitoring (memory system resource partitioning and monitoring, MPAM), a configuration parameter of heterogeneous scheduling, or another flow control configuration parameter. Configuration parameters in the MPAM may be shown in the following Table 1.

**Table 1**

| MDC accelerator | Corresponding MPAM parameter | Value example |
|---|---|---|
| CPU | Lower waterline | 50 |
| | Upper waterline | 200 |
| | Priority | 2 |
| AI | Lower waterline | 0 |
| | Upper waterline | 80 |
| | Priority | 1 |
| ISP | Lower waterline | 50 |
| | Upper waterline | 100 |
| | Priority | 4 |
| DVPP | Lower waterline | 0 |
| | Upper waterline | 100 |
| | Priority | 3 |

The foregoing system parameters may be included in a configuration file. The vehicle control apparatus may read the configuration file, and use a corresponding system parameter during running. In embodiments of this application, an adjustment operation on a system parameter may be implemented by modifying a system parameter in a configuration file.

In embodiments of this application, a parameter group may include one or more parameters, and the parameters may include the foregoing system parameters. A first parameter group and a second parameter group in the following are used to distinguish between different parameter groups, and both may be collectively referred to as a parameter group. When a parameter group is mentioned in the following, a quantity of parameter groups is not limited, for example, may be one or more parameter groups.

2. Performance status information: Performance status information indicates a performance status of a vehicle control apparatus. The performance status information includes but is not limited to at least one of CPU processing performance information, AI processing (for example, an NPU) performance information, and image signal processing (for example, an ISP or a DVPP) performance information. For example, the CPU processing performance may include a quantity of times for which a service running on the CPU is executed per second. The AI processing performance is similar to the CPU processing performance. For brevity, details are not described again. The image signal processing performance may include an execution frequency similar to the CPU processing performance, or may further include a loss rate (for example, a frame loss rate). To distinguish performance statuses of the vehicle control apparatus with different system parameters, in embodiments of this application, a performance status of the vehicle control apparatus before parameter adjustment is indicated by using first performance status information, and a performance status of the vehicle control apparatus after parameter adjustment is indicated by using second performance status information. The first performance status information and the second performance status information may be summarized as performance status information.

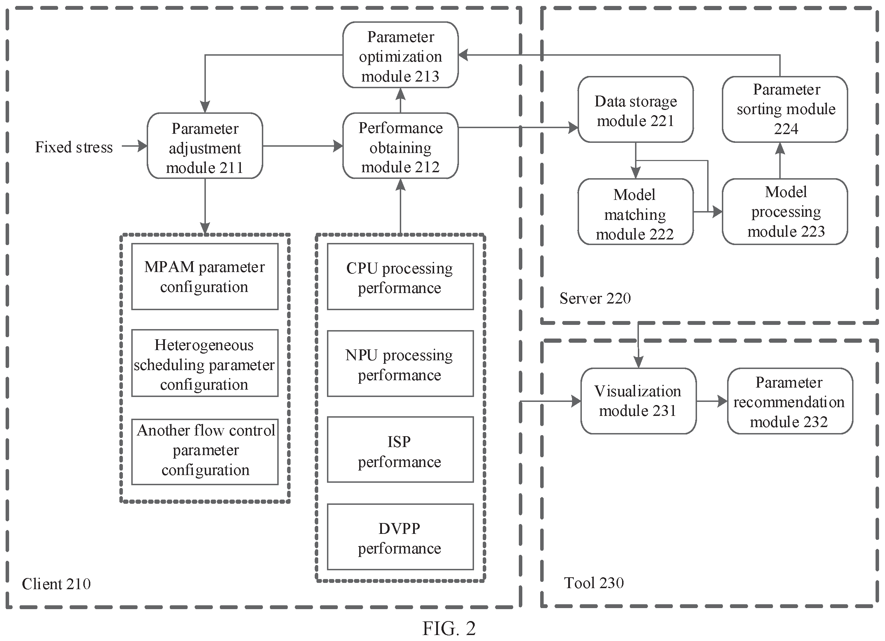

FIG. 2 is a diagram of a structure of a vehicle control system 200 according to an embodiment of this application. Referring to FIG. 2, the vehicle control system 200 may include a client (client) 210, a server (server) 220, and a tool (tool) 230. The client 210 and the server 220 may be connected in a wireless manner, the client 210 and the tool 230 may be connected in a wireless manner, and the server 220 and the tool 230 may be connected in a wired or wireless manner.

It should be understood that the parameter recommendation method provided in this embodiment of this application may be applied to a test phase, a maintenance phase, or a normal driving phase of a vehicle. When the method is applied to the test phase or the maintenance phase of the vehicle, a real vehicle-simulated stress, or referred to as a real vehicle-simulated configuration, may be provided for the vehicle control system 200. The real vehicle-simulated stress may be a preset fixed stress.

The client 210 may be deployed in the vehicle. For example, the client 210 may be connected to the vehicle control apparatus in a wired or wireless manner. The client 210 may obtain system parameter information, performance status information, and the like from the vehicle control apparatus, and in addition, the client 210 may adjust a system parameter of the vehicle control apparatus, to optimize a performance status of the vehicle control apparatus.

For example, the client 210 may include a parameter adjustment module 211, a performance obtaining module 212, and a parameter optimization module 213. When the vehicle is tested or maintained based on the fixed stress, the parameter adjustment module 211 may set a default system parameter based on the fixed stress, for example, set an MPAM configuration parameter, a heterogeneous scheduling configuration parameter, and another flow control configuration parameter to a default value. The performance obtaining module 212 obtains the performance status information (for example, first performance status information in the following) from the vehicle control apparatus, for example, including CPU processing performance, NPU processing performance, ISP processing performance, and DVPP processing performance. The performance obtaining module 212 may send the obtained performance status information (for example, the first performance status information in the following) of the vehicle control apparatus to the server 220. The parameter optimization module 213 may receive a parameter group (for example, K second parameter groups in the following) sent by the server 220, and then collaborate with the parameter adjustment module 211 to perform parameter optimization on the parameter group to obtain an optimized parameter group (for example, M first parameter groups in the following) and performance status information (for example, second performance status information in the following) corresponding to the optimized parameter group, and send the optimized parameter group and the second performance status information to the tool 230 for presentation.

The server 220 may perform analysis based on the performance status information of the vehicle control apparatus obtained by the client 210, to determine a parameter group used to optimize the performance status of the vehicle control apparatus, and send the parameter group used to optimize the performance status of the vehicle control apparatus to the client 210, so that the client 210 performs parameter adjustment on the vehicle control apparatus based on the parameter group, to optimize the performance status of the vehicle control apparatus.

For example, the server 220 may include a data storage module 221, a model matching module 222, a model processing module 223, and a parameter group sorting module 224. The data storage module 221 may receive and store the performance status information (for example, the first performance status information in the following) from the performance obtaining module 212. A storage mode of the data storage module 221 is not limited in this application. The model matching module 222 is configured to obtain a parameter determining model that matches the vehicle control apparatus. Optionally, the model matching module 222 may determine, based on an identifier of the vehicle control apparatus, the parameter determining model corresponding to the identifier. The identifier of the vehicle control apparatus may be sent by the client 210 to the server 220 and stored in the data storage module 221. The model matching module 222 may obtain the identifier of the vehicle control apparatus from the data storage module 221. Further, the model matching module 222 may send the parameter determining model to the model processing module 223. The model processing module 223 inputs the performance status information (for example, the first performance status information in the following) from the performance obtaining module 212 into the parameter determining model to obtain at least one parameter group. Further, the parameter sorting module 224 sorts the at least one parameter group output by the parameter determining model, obtains at least one parameter group (for example, the K second parameter groups in the following) based on a sorting result, and sends the at least one parameter group (for example, the K second parameter groups in the following) to the parameter optimization module 213.

The tool 230 may be configured to perform parameter group recommendation. For example, the tool 230 may include a visualization module 231 and a parameter recommendation module 232. The visualization module 231 may visually present obtained data. For example, the visualization module 231 renders and displays the performance status information (for example, the second performance status information respectively corresponding to the M first parameter groups in the following) sent by the client 210 or the server 220. A user may select one piece of the second performance status information through human-machine interaction. The parameter recommendation module 232 may render and display, based on the selection operation of the user, the first parameter group corresponding to the second performance status information, to implement parameter recommendation.

The server 220 and the tool 230 may be deployed on a server, a cloud server, a server cluster, a cloud server cluster, or the like. The server 220 and the tool 230 may be separately deployed independently, or may be deployed in an integrated manner. When the server 220 and the tool 230 are deployed in an integrated manner, the server 220 and the tool 230 may be considered as different software modules or a same software module. This is not limited in this application.

It should be understood that division into units/modules of the foregoing apparatus is merely logical function division. During actual implementation, all or some of the units/modules may be integrated into one physical entity, or may be physically separated.

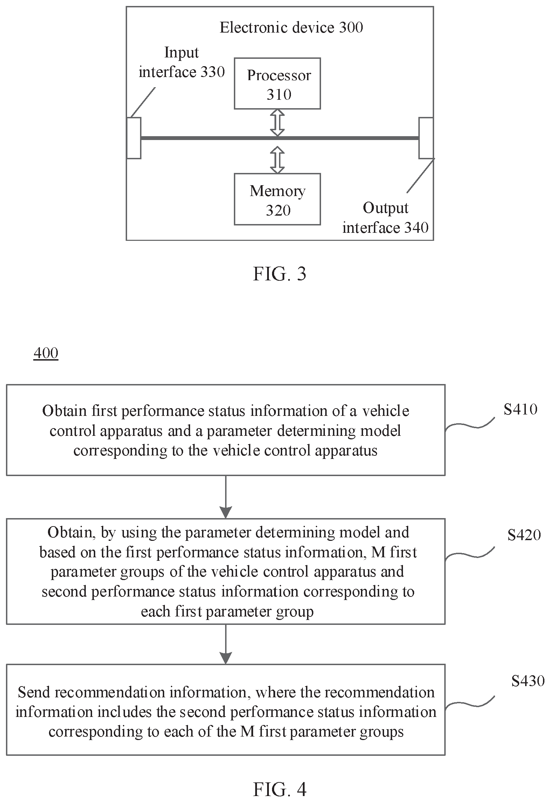

In some embodiments, the client 210 in the foregoing vehicle control system 200 may be implemented as an electronic device 300 shown in FIG. 3.

In some embodiments, the server 220 in the vehicle control system 200 may be implemented as the electronic device 300 shown in FIG. 3.

In some embodiments, the tool 230 in the vehicle control system 200 may be implemented as the electronic device 300 shown in FIG. 3.

When the server 220 and the tool 230 are deployed in an integrated manner, the server 220 and the tool 230 may be integrated into the electronic device 300 shown in FIG. 3.

FIG. 3 is a diagram of a structure of an electronic device according to an embodiment of this application. With reference to FIG. 3, the electronic device 300 may include a processor 310 and a memory 320. The processor 310 and the memory 320 communicate with each other through an internal connection path. Optionally, the memory 320 may include a read-only memory and a random access memory, and provide instructions and data for the processor 310. A part of the memory 320 may further include a non-volatile random access memory. The memory 320 may be a separate component, or may be integrated in the processor 310. The processor 310 may be configured to execute the instructions stored in the memory 320. When the processor 310 executes the instructions stored in the memory 320, the processor 310 is configured to perform steps and/or procedures in the foregoing method embodiments in this application.

In an implementation process, steps of the methods in embodiments of this application may be performed by a hardware processor in the processor 310, or may be performed by a combination of hardware and software modules in the processor 310. The software module may be located in a mature storage medium in this field. The storage medium is located in the memory 320, and the processor 310 reads information in the memory 320 and completes the steps in the following methods in combination with hardware of the processor.

In some embodiments, the apparatus 300 may further include an input interface 330. The processor 310 may control the input interface 330 to communicate with another device or chip, and specifically, may obtain information or data sent by the another device or chip.

In some embodiments, the apparatus 300 may further include an output interface 340. The processor 310 may control the output interface 340 to communicate with another device or chip, and specifically, may output information or data to the another device or chip.

In some embodiments, the apparatus 300 may implement corresponding procedures of the methods in embodiments of this application. For brevity, details are not described herein again.

It should be noted that, the processor 310 in embodiments of this application may be an integrated circuit chip, and has a signal processing capability. The processor 310 may be a microprocessor, a central processing unit (central processing unit, CPU), a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

The following describes in detail the parameter recommendation method provided in embodiments of this application with reference to the accompanying drawings.

For ease of understanding and description, the following describes the method provided in embodiments of this application by using a server as an execution body. The server may be, for example, the server 220 in FIG. 2. The execution body of the method is not limited in this application. A program that can perform the method provided in embodiments of this application by running code may serve as the execution body of the method provided in embodiments of this application. For example, the server may be implemented as a server or a control module in a server, may be implemented as a chip or a chip system in a server, or may be implemented as another functional module that can invoke a program and execute the program.

In some embodiments, in this application, interaction between a client, a server, and a tool is used as an example to describe the method provided in embodiments of this application. The client may be, for example, the client 210 in FIG. 2. The client may be implemented as a vehicle or a controller in a vehicle, may be implemented as a chip or a chip system in a vehicle, or may be implemented as another functional module that can invoke a program and execute the program. The tool may be, for example, the tool 230 in FIG. 2. The tool may be implemented as a server or a control module in a server, or may be implemented as a chip or a chip system in a server, or may be implemented as another functional module that can invoke a program and execute the program. As described above, the tool and server may be deployed independently or in an integrated manner. For ease of description, the following uses integrated deployment of the tool and the server as an example.

FIG. 4 is a flowchart of a parameter recommendation method 400 according to an embodiment of this application. As shown in FIG. 4, the method 400 may include a part or all of the following processes.

S410. Obtain first performance status information of a vehicle control apparatus and a parameter determining model corresponding to the vehicle control apparatus.

S420. Obtain, by using the parameter determining model and based on the first performance status information, M first parameter groups of the vehicle control apparatus and second performance status information corresponding to each first parameter group, where the second performance status information indicates a performance status of the vehicle control apparatus when the vehicle control apparatus runs based on the first parameter group, and M is a positive integer.

S430. Send recommendation information, where the recommendation information includes the second performance status information corresponding to each of the M first parameter groups.

In S410, the first performance status information may indicate the performance status before the vehicle control apparatus performs parameter adjustment. In other words, the first performance status information may be performance status information obtained from the vehicle control apparatus before the vehicle control apparatus performs parameter adjustment. As described above, a vehicle may perform parameter adjustment in a test phase, a maintenance phase, or a normal driving phase, and a client may obtain the first performance status information of the vehicle control apparatus after enabling a parameter adjustment mode, and send the first performance status information to a server.

Optionally, the first performance status information may include one or more values of each of N performance parameters, where N is a positive integer. The N performance parameters may include but are not limited to at least one of CPU processing performance, AI processing performance, and image signal processing performance.

Generally, the performance status of the vehicle control apparatus indicated by the first performance status information does not satisfy a performance requirement of the vehicle control apparatus. Therefore, parameter adjustment needs to be performed to enable the performance status of the vehicle control apparatus to satisfy the performance requirement. The performance requirement may be determined based on a user requirement or determined based on an application scenario. For example, that the first performance status information does not satisfy the performance requirement of the vehicle control apparatus may mean that the performance status of the vehicle control apparatus indicated by the first performance status information does not satisfy a preset performance status threshold. For example, when the performance requirement is optimal AI processing performance, a value of AI processing performance of the vehicle control apparatus indicated by the first performance status information is less than or equal to a preset AI processing performance threshold. For another example, when the performance requirement is optimal CPU processing performance, a value of the CPU processing performance of the vehicle control apparatus indicated by the first performance status information is less than or equal to a preset CPU processing performance threshold.

It should be noted that different vehicle control apparatuses may correspond to different parameter determining models. The different vehicle control apparatuses may be, for example, at least one of vehicle control apparatuses of different vendors, vehicle control apparatuses of different models, and vehicle control apparatuses with different configurations (including but not limited to software configurations and/or hardware configurations). The server may obtain a corresponding parameter determining model by matching based on the vehicle control apparatus. For example, a correspondence between the vehicle control apparatus and the parameter determining model is preset in the server, and the server determines, based on an identifier of the vehicle control apparatus, the parameter determining model corresponding to the vehicle control apparatus in the correspondence. Optionally, the identifier of the vehicle control apparatus may be obtained by the server from the client. For example, when a connection is established between the server and the client, the server receives the identifier of the vehicle control apparatus sent by the client. It should be noted that establishing the correspondence based on the identifier of the vehicle control apparatus and the parameter determining model is merely an example. This is not limited in this application. For example, when vehicle control apparatuses with different configurations correspond to different parameter determining models, a correspondence may be established based on a configuration of the vehicle control apparatus and the parameter determining model. The server may determine, based on the configuration of the vehicle control apparatus, the parameter determining model corresponding to the vehicle control apparatus in the correspondence.

The parameter determining model is used to analyze the input first performance status information to obtain at least one parameter group used to optimize the performance status of the vehicle control apparatus. In this embodiment of this application, the parameter determining model corresponding to the vehicle control apparatus may be preset or may be obtained through training by the server. The following describes an example of the parameter determining model corresponding to the vehicle control apparatus obtained through training by the server.

For example, the server may perform iterative training based on a plurality of pieces of training data to obtain the parameter determining model. The training data may be obtained based on historical data of the vehicle control apparatus, or the training data may be set based on experimental data or experience. Each piece of training data may include a performance status information sample and a parameter group sample of the vehicle control apparatus. It should be understood that the performance status information sample may indicate the performance status of the vehicle control apparatus before parameter adjustment, and after the vehicle control apparatus runs by using the parameter group sample, the performance status of the vehicle control apparatus is enabled to satisfy the performance requirement.

The server may obtain, through training in the foregoing example pre-training manner or in other words, in an offline training manner, the parameter determining model corresponding to the vehicle control apparatus. It should be noted that an execution body of model training is not limited in this application. For example, the server may receive a parameter determining model corresponding to a vehicle control apparatus sent by another apparatus or device. In addition, the parameter determining model corresponding to the vehicle control apparatus may be preset on the server.

In the foregoing S420, the first parameter group is used to implement parameter adjustment on the vehicle control apparatus. Specifically, after a vehicle end performs parameter adjustment on the vehicle control apparatus based on the obtained first parameter group, the performance status of the vehicle control apparatus may satisfy the performance requirement, to be specific, a value of the performance status of the vehicle control apparatus indicated by the second performance status information corresponding to the first parameter group is greater than or equal to the preset performance status threshold.

Optionally, the second performance status information may include the one or more values of each of the N performance parameters, where N is a positive integer. The N performance parameters may include but are not limited to at least one of CPU processing performance, AI processing performance, and image signal processing performance. Generally, the second performance status information and the first performance status information may correspond to a same performance parameter. However, this is not limited in this application. For example, the second performance status information may correspond to more or fewer performance parameters than the first performance status information.

In different user requirements or different application scenarios, the performance status threshold may be different. For example, when the performance requirement is optimal AI processing performance, a value of AI processing performance of the vehicle control apparatus indicated by the second performance status information is greater than or equal to a preset first AI processing performance threshold. For another example, when the performance requirement is optimal CPU processing performance, a value of CPU processing performance of the vehicle control apparatus indicated by the second performance status information is greater than or equal to a preset first CPU processing performance threshold. For another example, when the performance requirement is optimal image signal processing performance, a value of image signal processing performance of the vehicle control apparatus indicated by the second performance status information is greater than or equal to a preset image signal processing performance threshold. For another example, when the performance requirement is balanced configuration of AI and CPU, a value of AI processing performance of the vehicle control apparatus indicated by the second performance status information is greater than or equal to a preset second AI processing performance threshold, and a value of CPU processing performance of the vehicle control apparatus indicated by the second performance status information is greater than or equal to a preset second CPU processing performance threshold.

In the first example of S420, any parameter group output by the server by using the parameter determining model may be directly used to implement parameter adjustment on the vehicle control apparatus. In this case, at least one parameter group output by the parameter determining model is the M first parameter groups. In the second example of S420, any parameter group output by the server by using the parameter determining model needs to be processed (for example, filtering and/or parameter fine-tuning), to obtain a parameter group that can be applied to the vehicle control apparatus. In this case, the at least one parameter group output by the parameter determining model may be K second parameter groups in the following, where K is a positive integer, and the M first parameter groups are obtained after the K second parameter groups are processed.

In the foregoing first example, the server directly obtains, by using the parameter determining model, the parameter group for performing parameter adjustment on the vehicle control apparatus, which has high processing efficiency. In the foregoing second example, the parameter group output by the parameter determining model is further filtered and/or fine-tuned to obtain the parameter group for performing parameter adjustment on the vehicle control apparatus, which can further ensure that system performance obtained through parameter adjustment is effectively improved.

Based on the foregoing first example, the server may send the M first parameter groups to the client. For each first parameter group, the client may configure the first parameter group by using a parameter adjustment module, and when the vehicle control apparatus runs based on the first parameter group, obtain, by using a performance obtaining module, the second performance status information corresponding to the first parameter group. The client sends, to the server, the second performance status information corresponding to each of the M first parameter groups.

Based on the foregoing second example, the server may send the K second parameter groups to the client, and for each second parameter group, the client performs iterative optimization on the second parameter group until the performance status of the vehicle control apparatus satisfies the preset performance status threshold to obtain one or more second parameter groups corresponding to the second parameter group. It should be understood that, not all second parameter groups can obtain a corresponding first parameter group through iterative optimization. For example, when a quantity of iterations of iterative optimization performed by the client based on the second parameter group reaches a preset quantity of iterations, the performance status of the vehicle control apparatus still does not satisfy the preset performance status threshold, and the second parameter group cannot obtain any first parameter group through iteration.

For example, the client may send the second parameter group to the parameter adjustment module by using a parameter optimization module, configure the second parameter group by using the parameter adjustment module, and obtain the current performance status information by using the performance obtaining module when the vehicle control apparatus runs based on the second parameter group. When the current performance status of the vehicle control apparatus satisfies the preset performance status threshold, the client uses the current performance status information of the vehicle control apparatus as the second performance status information, uses a parameter group that the vehicle control apparatus currently participates in as the first parameter group, and sends the first parameter group and the second performance status information to the server. When the current performance status of the vehicle control apparatus does not satisfy the preset performance status threshold, the client performs parameter fine tuning on the second parameter group by using the parameter optimization module, configures the adjusted second parameter group by using the parameter adjustment module, and when the vehicle control apparatus runs based on the second parameter group, obtains the current performance status information by using the performance obtaining module, and then determines whether the current performance status satisfies the preset performance status threshold. The foregoing process is repeated until the current performance status of the vehicle control apparatus satisfies the preset performance status threshold, the current performance status information of the vehicle control apparatus is used as the second performance status information, and a parameter group that the vehicle control apparatus currently participates in is used as the first parameter group, and the client sends the first parameter group and the second performance status information to the server.

For example, before sending the second parameter group to the parameter adjustment module by using the parameter optimization module, the client may perform preliminary filtering and/or fine tuning on a second parameter, to improve applicability of the second parameter in the vehicle control apparatus and reduce complexity of iterative optimization.

In the foregoing second example, the server may sort the K second parameter groups by using the parameter group sorting module, to implement filtering of the K second parameter groups. For example, the server may sort the K second parameter groups based on at least one recommended parameter. The at least one recommended parameter may be a recommended parameter in different dimensions. The recommended parameter may be one of the foregoing N performance parameters. For example, the recommended parameter may be CPU processing performance, AI processing performance, or image signal processing performance. Alternatively, the recommended parameter may be determined by at least two performance parameters of the N performance parameters. For example, the recommended parameter may be a balanced configuration of CPU processing performance and AI processing performance, a balanced configuration of CPU processing performance and image signal processing performance, a balanced configuration of AI processing performance and image signal processing performance, or a balanced configuration of CPU processing performance, AI processing performance, and image signal processing performance. For example, after the K second parameter groups are sorted based on the at least one recommended parameter, each recommended parameter may correspond to at least one sorted second parameter group. For example, the at least one second parameter group includes at least one second parameter group sorted in descending order of CPU processing performance, at least one second parameter group sorted in descending order of AI processing performance, and at least one second parameter group sorted in descending order of CPU processing performance and AI processing performance.

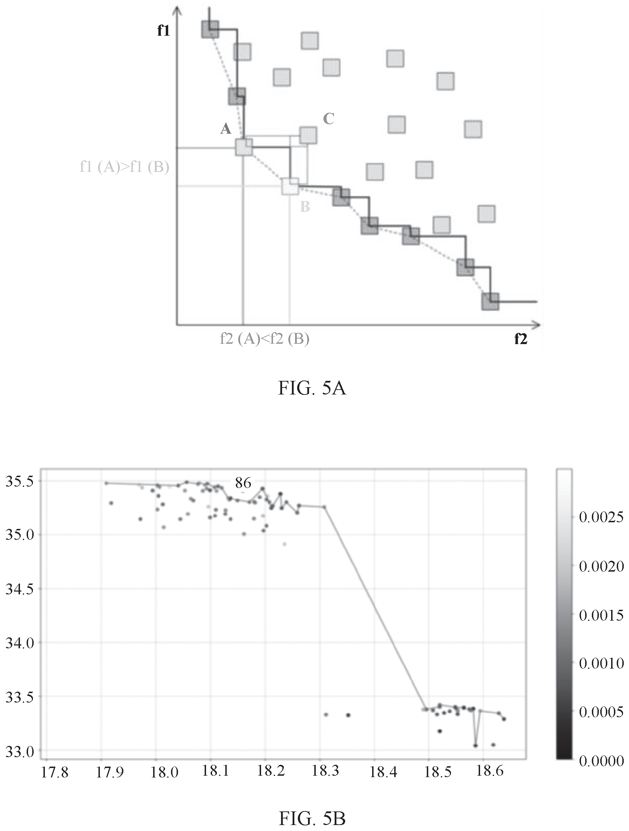

Optionally, when combined optimization of a plurality of performance parameters is considered, it may be understood as a solution to a Pareto optimal problem. Based on this, the server may sort the K second parameter groups according to a Pareto algorithm. As shown in FIG. 5A, two performance parameters are used as an example. A horizontal coordinate axis indicates CPU processing performance, and a vertical coordinate axis indicates AI processing performance. A dashed line indicates a Pareto optimal boundary, which is also referred to as a Pareto optimal frontier surface. Points on the Pareto optimal boundary, for example, points A and B, the point B is better than the point A in terms of CPU processing performance, and the point A is better than the point B in terms of AI processing performance. However, when the CPU processing performance and AI processing performance are balanced, both the point A and the point B are optimal solutions. For example, sequences of the point A and the point B are better than a sequence of a point C.

Following the foregoing example, after sorting the K second parameter groups, the server may send the K second parameter groups to the client, and the client may filter the K second parameter groups based on a sequence of the K second parameter groups, for example, select one or more second parameter groups ranked higher under each recommended parameter. Alternatively, after sorting the K second parameter groups, the server may filter the K second parameter groups, for example, select one or more second parameter groups ranked higher under each recommended parameter, and send the at least one second parameter group obtained through filtering to the client.

In some embodiments, to continuously improve accuracy of the parameter determining model, to ensure that system performance obtained through parameter adjustment is effectively improved, the server may update the parameter determining model based on the execution process of S420. For example, in the second example of S420, the server outputs the K second parameter groups based on the first performance status information and by using the parameter determining model, obtains the M first parameter groups determined based on the K second parameter groups, and trains the parameter determining model based on the first performance status information and the obtained M first parameter groups, to obtain an updated parameter determining model.

In some embodiments, the preset performance status threshold is associated with performance boundary information. For example, the performance status threshold may be a performance boundary value. For another example, a distance between the performance status threshold and the performance boundary value may be less than or equal to a preset value. The performance boundary information may be determined based on historical performance status information of the vehicle control apparatus. The performance boundary information may indicate an optimal performance status that can be achieved by the vehicle control apparatus. For example, the performance boundary information may indicate optimal performance boundaries that can be separately achieved by the vehicle control apparatus with the N performance parameters.

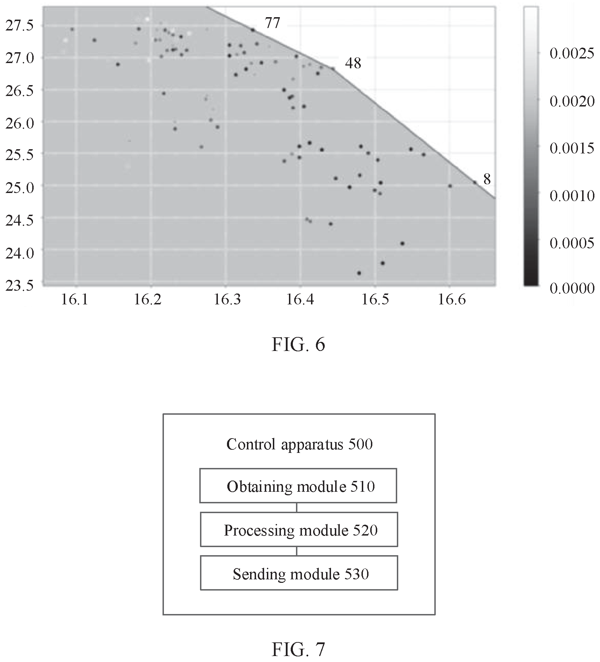

Referring to FIG. 6, a horizontal coordinate axis indicates CPU processing performance, a vertical coordinate axis indicates AI processing performance, and a grayscale value indicates ISP performance (for example, an ISP loss rate, where a smaller grayscale value indicates a lower ISP loss rate, and a greater grayscale value indicates a higher ISP loss rate). Each point in FIG. 6 corresponds to a parameter group, and coordinates of the point are determined based on a performance status when the vehicle control apparatus runs by using the parameter group. A broken line (which may also be a curve or a straight line in some examples) in FIG. 6 represents a boundary of the vehicle control apparatus, and points (for example, a point 77, a point 48, and a point 8) on the broken line may respectively correspond to one first parameter group. The points (for example, the point 77, the point 48, and the point 8) on the broken line may be respectively first parameter groups corresponding to different recommended parameters. For example, as shown in Table 2.

**Table 2**

| Sequence number | Configuration item | Performance indicator |
|---|---|---|
| 77 | Optimal AI processing performance | AI inference frame rate: 27.4 |
| | | CPU service performance: 16.3 |
| 48 | Balanced configuration of AI processing performance and CPU processing performance | AI inference frame rate: 26.8 |
| | | CPU service performance: 16.4 |
| 8 | Optimal CPU processing performance | AI inference frame rate: 25.0 |
| | | CPU service performance: 16.7 |

For example, a performance boundary in FIG. 6 may be determined according to the Pareto algorithm. An implementation of the performance boundary is described in the foregoing example. For brevity, details are not described again. Referring to FIG. 5B, a horizontal coordinate axis indicates CPU processing performance, a vertical coordinate axis indicates AI processing performance, and a grayscale value indicates ISP performance. Considering a Pareto optimal boundary of three performance parameters, a value of "pseudo optimal" may be filtered out by using the optimal boundary. As shown in the figure, when a parameter group corresponding to a point 86 is applied to the vehicle control apparatus, although CPU processing performance and AI performance are good, an ISP frame loss is severe and does not satisfy a requirement.

It should be noted that, for ease of understanding, in this embodiment of this application, only three performance parameters are used as an example for description. However, this is not limited in this application. The server may further determine the performance boundary and sort the parameter groups based on more or fewer performance parameters. For example, the server may determine the performance boundary information based on the historical performance status information and based on CPU processing performance, AI processing performance, ISP performance, and DVPP performance.

In S430, the server may send the recommendation information to the tool, where the recommendation information includes the second performance status information corresponding to each of the M first parameter groups. After receiving the recommendation information, the tool may render the recommendation information, generate a recommendation interface, and present the recommendation interface on a display screen. When the server and the tool are deployed in an integrated manner, for example, the tool is deployed in an integrated manner on the server, the server may generate the recommendation interface based on the recommendation information, and present the recommendation interface on the display screen. It should be noted that this application does not limit presentation of the recommendation information on a display screen, for example, the recommendation information may be played through a speaker.

By using the recommendation information, the performance status of the vehicle control apparatus when the vehicle control apparatus runs based on each first parameter group may be presented, so that a user selects a first parameter group that satisfies the performance requirement. A presentation manner of the recommendation information is not limited in this embodiment of this application. For example, the second performance status information corresponding to the M first parameter groups may be presented in a form of coordinates. Referring to FIG. 7, a horizontal coordinates axis is CPU processing performance, a vertical axis is AI processing performance, and a grayscale value indicates ISP performance. AI processing performance at a point 77 is optimal in three pieces of second performance status information, CPU processing performance at a point 8 is optimal in the three pieces of second performance status information, and performance at a point 48 is the most balanced in the three pieces of second performance status information. It is assumed that the performance requirement is optimal AI processing performance. The user may select the point 77 on the recommendation interface, to select a first parameter group corresponding to the point 77. The tool may send the selected first parameter group to the client, so that the client performs parameter adjustment on the vehicle control apparatus based on the selected first parameter group, and the vehicle control apparatus implements a performance status indicated by second performance status information achieved by the point 77.

Optionally, the tool may display, in response to a selection operation performed by the user on the second performance status information, the first parameter group corresponding to the second performance status information, to present, to the user, the first parameter group to be used by the vehicle control apparatus to perform parameter adjustment. Optionally, the user may determine to use the first parameter group, or the user may modify a parameter in the first parameter group.

In some embodiments, in addition to the second performance status information, the recommendation information may further include the M first parameter groups. Optionally, the recommendation information may include an identifier (for example, the foregoing 77, 48, or 8) of each of the M first parameter groups, and/or the recommendation information may include a value of a parameter in each of the M first parameter groups.

In some embodiments, the recommendation information may include the content shown in Table 2.

In some embodiments, the recommendation information may further include the performance boundary information. As described above, the performance boundary information may be determined based on the historical performance status information of the vehicle control apparatus. For descriptions of the performance boundary information, refer to the foregoing examples. For brevity, details are not described again. The recommendation interface generated based on the recommendation information includes a position relationship between the second performance status information corresponding to each first parameter group and the performance boundary information in a coordinate system. It should be understood that, the position relationship between the second performance status information corresponding to each first parameter group and the performance boundary information in the coordinate system is presented in the recommendation interface, so that it can be determined whether the second performance status information corresponding to the first parameter group can achieve an optimal performance status of the vehicle control apparatus. A smaller difference between the second performance status information corresponding to the first parameter group and the performance boundary information indicates that the vehicle control apparatus can achieve a good performance status after using the first parameter group. For example, the second performance status information is in the performance boundary information in the coordinate system, that is, it indicates that the first parameter group corresponding to the second performance status information can achieve a good performance status. In an example, for the second performance status information corresponding to the M first parameter groups and the performance boundary information that are presented in the recommendation interface, refer to FIG. 6. Second performance statuses corresponding to the three first parameter groups are respectively presented as the point 77, the point 48, and the point 8. The point 77, the point 48, and the point 8 are all located on a performance boundary of the vehicle control apparatus. Compared with other points in FIG. 6, AI processing performance of the point 77 is optimal, CPU processing performance at the point 8 is optimal, and performance at the point 48 is the most balanced.

In some embodiments, S430 may be replaced with the following: The server determines one first parameter group from the M first parameter groups based on a preset performance requirement, and sends the first parameter group to the client, so that the client configures the first parameter group for the vehicle control apparatus, to implement automatic parameter adjustment and further improve parameter adjustment efficiency.

In some embodiments, the server may send recommendation information of the K second parameter groups, where the recommendation information may include information about each of the K second parameter groups, for example, an identifier (for example, 77, 48, or 8) of each parameter group, or a parameter included in each parameter group. The tool may present the information about each of the K second parameter groups. When the K second parameter groups are used as final recommended parameters, a parameter group used when the vehicle control apparatus performs parameter adjustment may be selected from the K second parameter groups and the M first parameter groups, to expand a parameter group selection range. When the K second parameter groups are not used as the final recommended parameters, execution process data of a parameter recommendation method may be presented, to improve reliability of a recommendation result.

Therefore, in this embodiment of this application, the server identifies the first performance status information by using the parameter determining model corresponding to the vehicle control apparatus, to obtain the M first parameter groups of the vehicle control apparatus and the second performance status information corresponding to each first parameter group. The second performance status information indicates the performance status of the vehicle control apparatus when the vehicle control apparatus runs based on the first parameter group, to improve parameter adjustment efficiency and effectively improve system performance obtained through parameter adjustment. Further, the recommendation information sent by the server includes the second performance status information corresponding to each of the M first parameter groups, to represent the performance status that can be achieved by the vehicle control apparatus by using the first parameter group, and further ensure that the performance status that is achieved by the vehicle control apparatus finally by using the first parameter group satisfies the performance requirement.

In various embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

FIG. 7 is a block diagram of a parameter recommendation apparatus 700 according to an embodiment of this application. As shown in FIG. 7, the apparatus 700 includes at least an obtaining module 710, a processing module 720, and a sending module 730.

The obtaining module 710 is configured to obtain first performance status information of a vehicle control apparatus and a parameter determining model corresponding to the vehicle control apparatus. The processing module 720 is configured to obtain, by using the parameter determining model and based on the first performance status information, M first parameter groups of the vehicle control apparatus and second performance status information corresponding to each first parameter group, where the second performance status information indicates a performance status of the vehicle control apparatus when the vehicle control apparatus runs based on the first parameter group. The sending module 730 is configured to send recommendation information, where the recommendation information includes the second performance status information corresponding to each of the M first parameter groups.

For example, the obtaining module 710 may include the data storage module 221 in FIG. 2, configured to obtain the first performance status information from the client 210 and store the first performance status information.

For example, the obtaining module 710 may include the model matching module 222 in FIG. 2, configured to obtain the parameter determining model that matches the vehicle control apparatus.

For example, the processing module 720 may include the model processing module 223 in FIG. 2, configured to input the first performance status information of the vehicle control apparatus into the parameter determining model to obtain at least one parameter group (for example, K second parameter groups or the M first parameter groups).

For example, the processing module 720 may include the parameter group sorting module 224 in FIG. 2, configured to sort at least one parameter group (for example, the K second parameter groups or the M first parameter groups) output by the parameter determining model.

For example, the obtaining module 710 may be implemented as the input interface 330 in FIG. 3, the sending module 730 may be implemented as the output interface 340 in FIG. 3, and the processing module 720 may be implemented as the processor 310 in FIG. 3.

It should be understood that a specific process in which the units perform the foregoing corresponding steps is described in detail in the foregoing method embodiments, and for brevity, details are not described herein.

It should be understood that division into the modules of the foregoing apparatus is merely logical function division. During actual implementation, all or some of the units may be integrated into one physical entity or may be physically separated.

Embodiments of this application further provide a computer-readable storage medium, configured to store a computer program.

In some embodiments, the computer-readable storage medium may be used in the server, the client, or the tool in embodiments of this application, and the computer program enables a computer to perform corresponding procedures in the methods in embodiments of this application. For brevity, details are not described herein again.

An embodiment of this application further provides a computer program product, including computer program instructions.

In some embodiments, the computer program product may be used in the server, the client, or the tool in embodiments of this application, and the computer program instructions enable a computer to perform corresponding procedures in the methods in embodiments of this application. For brevity, details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A parameter recommendation method, comprising:
obtaining first performance status information of a vehicle control apparatus and a parameter determining model corresponding to the vehicle control apparatus;
obtaining, by using the parameter determining model and based on the first performance status information, M first parameter groups of the vehicle control apparatus and second performance status information corresponding to each first parameter group, wherein the second performance status information indicates a performance status of the vehicle control apparatus when the vehicle control apparatus runs based on the first parameter group; and
sending recommendation information, wherein the recommendation information comprises the second performance status information corresponding to each of the M first parameter groups.

2. The method according to claim 1, wherein the recommendation information further comprises performance boundary information, the performance boundary information is determined based on historical performance status information of the vehicle control apparatus, the recommendation information is used to generate a recommendation interface, and the recommendation interface comprises a position relationship between the second performance status information corresponding to each first parameter group and the performance boundary information in a coordinate system.

3. The method according to claim 1 or 2, wherein the first performance status information comprises one or more values of each of N performance parameters, and/or a second performance status comprises the one or more values of each of the N performance parameters, and the N performance parameters comprise at least one of central processing unit CPU processing performance, artificial intelligence AI processing performance, and image signal processing performance.

4. The method according to claim 3, wherein each of the M first parameter groups corresponds to one recommended parameter, the first parameter group enables optimal performance of the recommended parameter of the vehicle control apparatus, and the recommended parameter is one of the N performance parameters, or the recommended parameter is determined by at least two performance parameters of the N performance parameters.

5. The method according to any one of claims 1 to 4, wherein the obtaining, by using the parameter determining model and based on the first performance status information, the M first parameter groups of the vehicle control apparatus and the second performance status information corresponding to each first parameter group comprises:
inputting the first performance status information into the parameter determining model, to obtain K second parameter groups;
sending the K second parameter groups; and
receiving the M first parameter groups and the second performance status information corresponding to each first parameter group, wherein the M first parameter groups are obtained by performing iterative optimization on each of the K second parameter groups until the performance status of the vehicle control apparatus satisfies a preset performance status threshold.

6. The method according to claim 5, wherein the sending the K second parameter groups comprises:
sorting the K second parameter groups according to a Pareto algorithm; and
sending the sorted K second parameter groups.

7. The method according to claim 5 or 6, wherein the performance status threshold is associated with the performance boundary information.

8. The method according to any one of claims 5 to 7, further comprising:
sending recommendation information of the K second parameter groups, wherein the recommendation information comprises information about each of the K second parameter groups.

9. The method according to any one of claims 1 to 8, further comprising:
training the parameter determining model based on the first performance status information and the M first parameter groups, to obtain an updated parameter determining model.

10. The method according to any one of claims 2 to 9, further comprising:
determining the performance boundary information according to the Pareto algorithm and based on the historical performance status information of the vehicle control apparatus.

11. A parameter recommendation apparatus, comprising:
an obtaining module, configured to obtain first performance status information of a vehicle control apparatus and a parameter determining model corresponding to the vehicle control apparatus;
a processing module, configured to obtain, by using the parameter determining model and based on the first performance status information, M first parameter groups of the vehicle control apparatus and second performance status information corresponding to each first parameter group, wherein the second performance status information indicates a performance status of the vehicle control apparatus when the vehicle control apparatus runs based on the first parameter group; and
a sending module, configured to send recommendation information, wherein the recommendation information comprises the second performance status information corresponding to each of the M first parameter groups.

12. The apparatus according to claim 11, wherein the recommendation information further comprises performance boundary information, the performance boundary information is determined based on historical performance status information of the vehicle control apparatus, the recommendation information is used to generate a recommendation interface, and the recommendation interface comprises a position relationship between the second performance status information corresponding to each first parameter group and the performance boundary information in a coordinate system.

13. The apparatus according to claim 11 or 12, wherein the first performance status information comprises one or more values of each of N performance parameters, and/or a second performance status comprises the one or more values of each of the N performance parameters, and the N performance parameters comprise at least one of central processing unit CPU processing performance, artificial intelligence AI processing performance, and image signal processing performance.

14. The apparatus according to claim 13, wherein each of the M first parameter groups corresponds to one recommended parameter, the first parameter group enables optimal performance of the recommended parameter of the vehicle control apparatus, and the recommended parameter is one of the N performance parameters, or the recommended parameter is determined by at least two performance parameters of the N performance parameters.

15. The apparatus according to any one of claims 11 to 14, wherein the processing module is specifically configured to:
input the first performance status information into the parameter determining model, to obtain K second parameter groups;
send the K second parameter groups; and
receive the M first parameter groups and the second performance status information corresponding to each first parameter group, wherein the M first parameter groups are obtained by performing iterative optimization on each of the K second parameter groups until the performance status of the vehicle control apparatus satisfies a preset performance status threshold.

16. The apparatus according to claim 15, wherein the processing module is specifically configured to:
sort the K second parameter groups according to a Pareto algorithm; and
send the sorted K second parameter groups.

17. The apparatus according to claim 15 or 16, wherein the performance status threshold is associated with the performance boundary information.

18. The apparatus according to any one of claims 15 to 17, wherein the sending module is further configured to:
send recommendation information of the K second parameter groups, wherein the recommendation information comprises information about each of the K second parameter groups.

19. The apparatus according to any one of claims 11 to 18, wherein the processing module is further configured to:
train the parameter determining model based on the first performance status information and the M first parameter groups, to obtain an updated parameter determining model.

20. The apparatus according to any one of claims 12 to 19, wherein the processing module is further configured to:
determine the performance boundary information according to the Pareto algorithm and based on the historical performance status information of the vehicle control apparatus.

21. A chip, comprising a processor, configured to invoke computer instructions from a memory and run the computer instructions, to implement the method according to any one of claims 1 to 10.

22. An electronic device, comprising a processor and a memory, wherein the memory is configured to store a computer program, and the processor is configured to invoke and run the computer program to implement the method according to any one of claims 1 to 10.

23. A computer-readable storage medium, configured to store computer program instructions, wherein a computer program enables a computer to perform the method according to any one of claims 1 to 10.

24. A computer program product, comprising computer program instructions, wherein the computer program instructions enable a computer to perform the method according to any one of claims 1 to 10.
